# EUROPEAN PATENT SPECIFICATION

(11) **EP 2 477 723 B1**
(45) Date of publication and mention of the grant of the patent: **22.08.2018**
(21) Application number: 10752684.0
(22) Date of filing: 01.09.2010
(51) Int. Cl.: B01D 53/14, B01D 53/18, B01D 53/62

(54) **SINGLE ABSORBER VESSEL TO CAPTURE CO2**
EINZELABSORPTIONSBEHÄLTER ZUM EINFANGEN VON CO2
DISPOSITIF À ABSORBEUR UNIQUE UTILISÉ POUR LA CAPTURE DE CO2

(30) Priority: 15.09.2009 US 560004; 20.11.2009 US 622653; 16.12.2009 US 639597
(43) Date of publication of application: 25.07.2012
(73) Proprietor: General Electric Technology GmbH, 5400 Baden (CH)
(72) Inventor: MURASKIN, David J., Knoxville Tennessee 37934 (US); DUBE, Sanjay K., Knoxville Tennessee 37923 (US); HIWALE, Rameshwar S., Knoxville Tennessee 37923 (US); KOSS, Peter U., CH-8702 Zollikon (CH)
(74) Representative: General Electric Technology GmbH
(86) International application number: PCT/US2010/047421
(87) International publication number: WO 2011/034724

(56) References cited:
- DE-A1- 2 017 291
- DE-A1- 19 909 923
- DE-C1- 19 929 408
- US-A- 2 878 099
- US-A- 4 853 012
- US-A1- 2008 072 762
- US-A1- 2008 159 937
- US-A1- 2009 101 012

## Description

### Field of the invention

The present invention relates to a system and method for removing carbon dioxide from a flue gas stream using a multi-stage absorber vessel.

### Background

In the combustion of a fuel, such as coal, oil, peat, waste, etc., in a combustion plant, such as a power plant, a hot process gas is generated, often referred to as a flue gas, containing, among other components, carbon dioxide, CO₂. The negative environmental effects of releasing carbon dioxide to the atmosphere have been widely recognized, and have resulted in the development of systems and processes adapted for removing carbon dioxide from the hot process gas generated in the combustion of the above mentioned fuels.

One system and process previously disclosed is a single-stage Chilled Ammonia based system and method for removal of carbon dioxide (CO₂) from a post-combustion flue gas stream. Such a system and process has been proposed and taught in published US Patent Application 2008/0072762 entitled Ultra Cleaning of Combustion Gas Including the Removal of CO₂.

In a chilled ammonia based system/method for CO₂ removal, an absorber vessel is provided in which an ionic solution is contacted in counter current flow with a flue gas stream containing CO₂. The ionic solution may be composed of, for example, water and ammonium ions, bicarbonate ions, carbonate ions, and/or carbamate ions.

The absorber vessel is configured to receive a flue gas stream (FG) originating from, for example, the combustion chamber of a fossil fuel fired boiler. It is also configured to receive a CO₂ lean ionic solution supply from a regeneration system. The lean ionic solution is introduced into the vessel via a liquid distribution system while the flue gas stream FG is also received by the absorber vessel via a flue gas inlet.

The ionic solution is put into contact with the flue gas stream via a gas-liquid contacting device (hereinafter, mass transfer device, MTD) used for mass transfer and located in the absorber vessel and within the path that the flue gas stream travels from its entrance via an inlet at a bottom portion of the absorber vessel to its exit at a top portion of the absorber vessel. The MTD may be, for example, one or more commonly known structured or random packing materials, or a combination thereof.

The ionic solution is introduced at the top of the MTD and falls downward through the MTD coming into contact with the flue gas stream FG that is rising upward (opposite the direction of the ionic solution) and through the MTD.

Once contacted with the flue gas stream, the ionic solution acts to absorb CO₂ from the flue gas stream, thus making the ionic solution "rich" with CO₂ (rich solution). The rich ionic solution continues to flow downward through the mass transfer device and is then collected in the bottom of the absorber vessel. The rich ionic solution is then regenerated via a regenerator system to release the CO₂ absorbed by the ionic solution from the flue gas stream. The CO₂ released from the ionic solution may then be output to storage or other predetermined uses/purposes. Once the CO₂ is released from the ionic solution, the ionic solution is said to be "lean". The lean ionic solution is then again ready to absorb CO₂ from a flue gas stream and may be directed back to the liquid distribution system whereby it is again introduced into the absorber vessel.

US 2 878 099 A discloses a system with an absorber vessel with multiple absorption stages. DE 2 017 291 discloses a system with an absorber vessel with a series of absorption stages and supply vessels which are separated from one another. DE 19909923 describes the production of acrylic acid by gas phase partial oxidation of propane or propene and/or acrolein with oxygen (O2) using heterogeneous catalysis, in which a substance inhibiting free radical polymerization of acrylic acid is added in the separating column. '923 describes a system which is of background relevance to the present invention.

Published US Patent Application 2009/0101012 describes a multi-stage CO₂ removal system comprising an absorber vessel in which CO₂ is removed from flue gas by absorption with an ionic solution, such as an ammonia solution, in different absorption stages operating at different temperatures and different NH₃-to-CO₂ ratios in the ionic solution. The multi-stage absorber vessel comprises a single sump in which CO₂ rich ionic solution is collected for transport to a regenerator.

A potential drawback associated with the NH₃ based absorption systems and processes of the prior art is that solids, such as ammonium carbonate and/or bicarbonate, formed by chemical reactions between NH₃ and CO₂, may cause plugging of the absorption column, resulting in a deterioration of the overall performance of the system.

### Summary of the invention

Embodiments of the present invention provide a system and method for capturing carbon dioxide (CO₂) from a process gas stream in accordance with the appended claims.

It is an object of the embodiments of the present invention to provide a multi-stage absorber vessel which facilitates recycling of ionic solution.

It is another object of the embodiments of the present invention to provide multi-stage absorber vessel which reduces problems associated with plugging and deposition of solids formed within the absorber vessel.

In a first aspect of the present invention, the above mentioned objects, as well as further objects, which will become apparent to the skilled person when presented with the present disclosure, are achieved by the provision of a system for removing carbon dioxide from a flue gas stream according to the method outlined below (also referred to herein as "CO₂ capture system"), the system comprising *inter alia*:
an absorber vessel configured to receive a flue gas stream,
said absorber vessel comprising
a first absorption stage configured to receive the flue gas stream and contact it with a first ionic solution,
a second absorption stage configured to receive flue gas which has passed the first absorption stage and contact it with a second ionic solution,
a first sump vessel, and a
second sump vessel,
wherein said first absorption stage comprises a liquid collection receptacle arranged to collect ionic solution from the first absorption stage and deliver it to the first sump vessel, and said second absorption stage comprises a liquid collection receptacle arranged to collect ionic solution from the second absorption stage and deliver it to the second sump vessel.

A multi-stage absorber vessel, in which a number of different absorption stages operate under different conditions, may often constitute a superior alternative to multiple single-stage absorber vessels arranged in series. Advantages of the multi-stage absorber vessel include, e.g., lower capital costs for vessels, packing and foundations.

The present invention is based on the inventive insight that the efficiency and versatility of a multi-stage absorber vessel may be significantly improved by division of the sump of the absorber vessel into two or more separate sections, referred to herein as sump vessels. Each of the sump vessels is arranged to receive used ionic solution from one or more predetermined absorption stages. The use of multiple sump vessels facilitates recycling of used ionic solution within the absorber vessel since ionic solution from one or more absorption stages having similar composition and properties may be collected in a first sump vessel, while ionic solution from one or more other absorption stages having similar composition and properties, different to the composition and properties of the ionic solution collected in the first sump vessel, may be collected in a second sump vessel. The ionic solution collected in the first and second sump vessels may be recycled, possibly after adjustment of the composition and properties of the respective ionic solution to a desired absorption stage. Thus, the use of multiple sump vessels allows the operating conditions, such as for example temperature, ionic solution composition and flow rate, of each absorption stage to be varied within a wide range. For example, one or more absorption stages may be operated under conditions resulting in the precipitation of solids, while one or more absorption stages are operated under conditions not resulting in precipitation of solids.

The absorber vessel comprises at least a first and a second absorption stage configured for absorption of CO₂ from a flue gas stream by bringing the flue gas stream into contact with an ionic solution flow under conditions allowing absorption of CO₂ in the ionic solution. Each absorption stage comprises at least one gas-liquid contact mass transfer device, also referred to herein as "mass transfer device" or "MTD".

Each of the first and second absorption stages further comprise a liquid collection receptacle for collecting ionic solution which has been used in the respective absorption stage. The first absorption stage comprises a liquid collection receptacle arranged to collect ionic solution from the first absorption stage and deliver it to a first sump vessel, and the second absorption stage comprises a liquid collection receptacle arranged to collect ionic solution from the second absorption stage and deliver it to the second sump vessel. The liquid collection receptacles of each of the first and second absorption stages may be configured to collect all or a portion of the used ionic solution from the respective absorption stage. The liquid collection receptacles may for example comprise a sloped collection tray or bubble cap tray.

The first absorption stage preferably comprises a liquid distribution device and an ionic solution delivery path configured for delivering ionic solution from the first sump vessel to the liquid distribution device.

The second absorption stage preferably comprises a liquid distribution device and an ionic solution delivery path configured for delivering ionic solution from the second sump vessel to the liquid distribution device.

The sump vessels may be provided in the form discrete vessels separated from the absorber vessel, or in the form of vessels integrated in the absorber vessel, or a combination thereof. Each sump vessel may be in liquid contact with one or more of the absorption stages of the absorber vessel, such that used ionic solution may be collected from each absorption stage and directed to the sump vessel, and such that ionic solution from the sump vessel may be recycled to one or more of the absorption stages. One or more of the sump vessels may preferably be formed by a bottom section of the absorber vessel. In an embodiment, the absorber vessel comprises a bottom section, in which a first and a second sump vessel is formed by two sub-sections of the bottom section.

The effectiveness of the CO₂ capture system in removing CO₂ from a flue gas stream rests largely on: 1) the temperature (T) of the ionic solution sprayed into the absorber vessel, and 2) the mole ratio (R) of ammonia contained in the ionic solution to the CO₂ contained in the ionic solution.

Generally, the lower the temperature and the lower the R value, the less effective an ammonia based CO₂ capture system is in removing CO₂ from a flue gas stream. The temperature of the ionic solution may be controlled via heating and/or refrigeration systems. The R value may be controlled, e.g., by controlling the amount of ammonia in the ionic solution. At least one of the absorption stages of the CO₂ capture system may be configured to operate under conditions such that solid ammonium bicarbonate is formed. Formation of solid ammonium carbonate and bicarbonate in the ionic solution may be advantageous since it increases the CO₂ carrying capacity of the ionic solution According to the invention, the first absorption stage is configured to operate under conditions such that solid ammonium bicarbonate is formed. Suitable conditions promoting formation of solid ammonium carbonate and bicarbonate include low NH₃-to-CO₂ mole ratio (R) of the ionic solution are an R value in the range of 1.2 to 2.0, for example in the range of 1.4 to 1.6.

Thus, the system further comprises a control system configured to maintain the NH₃-to-CO₂ mole ratio (R) of the ionic solution in the first sump vessel in a range of 1.2 to 2.0.

In order to achieve CO₂ removal from the flue gas down to a low residual concentration, such as less than 10% or less than 5% of the original concentration, at least one absorption stage is configured to operate under conditions providing high CO₂ absorption efficiency. Suitable conditions promoting high CO₂ absorption efficiency include high NH₃-to-CO₂ mole ratio (R) of the ionic solution are an R value in the range of 2.0 to 4.0, for example in the range of 2.0 to 2.5.

The system further comprises a control system configured to maintain the NH₃-to-CO₂ mole ratio (R) of the ionic solution in the second sump vessel in a range of 2.0 to 4.0, for example in the range of 2.0 to 2.5.

In an embodiment, the control system comprises a device configured to introduce NH₃ or a medium having an NH₃-to-CO₂ mole ratio (R) higher than the R of the ionic solution in the sump vessel into the ionic solution. As an example the R value of 2.0 may be adjusted by introduction of a medium having an R value of 2.5 or higher. The high R medium may, e.g., be provided from an ionic solution regenerator. Such a device may for example include a fluid connection to a supply tank for NH₃ or high R ionic solution, control valve and a pump.

The temperature is an important variable for the CO₂ absorption in the capture system. The temperature of the ionic solution in each absorption stage may be selected depending, e.g., on the degree of CO₂ removal efficiency desired, and on whether formation of solid ammonium bicarbonate is desired. The temperature may also be selected such that the ammonia slip, i.e. the amount of ammonia which is evaporated and incorporated into the flue gas stream, is maintained at an acceptable level. The temperature of the ionic solution when introduced into the absorption stages of the absorber vessel may generally be in the range of 0 to 25 °C, but may also be higher or lower in some cases. As an example a temperature in the range of 5 to 20 °C allows high CO₂ capture efficiency with acceptable ammonia evaporation.

In an embodiment, the ionic solution delivery path of the first absorption stage comprises a heat exchange device for controlling the temperature of the ionic solution delivered to the liquid distribution device of the first absorption stage. The temperature of the ionic solution delivered to the liquid distribution device may preferably be controlled to be in the range of 5 to 20 °C.

In an embodiment, the ionic solution delivery path of the second absorption stage comprises a heat exchange device for controlling the temperature of the ionic solution delivered to the liquid distribution device of the second absorption stage. The temperature of the ionic solution delivered to the liquid distribution device may preferably be controlled to be in the range of 5 to 20 °C.

At low temperatures, for example, 0 °C up to 20 °C, and low R values, for example, 1.2 up to 2.0 solid ammonium bicarbonate particles may precipitate from the ionic solution after it has been contacted with the flue gas stream. These solids contain very high concentrations of CO₂ (approximately 55% by weight) that has been removed from the flue gas stream by virtue of the ionic solution being placed in contact therewith. Thus, the precipitation of the solids is desired since they contain high concentrations of CO₂ and can be easily separated from the ionic solution and removed.

The first absorption stage is configured for operating with an ionic solution containing solid particles.

Upon contact with the flue gas stream the ionic solution reacts with CO₂ that may be contained in the flue gas stream. This reaction is exothermic and as such results in the generation of heat in the absorber vessel. This heat can cause some of the ammonia contained in the ionic solution to change into a gas. The gaseous ammonia then, instead of migrating downward along with the liquid ionic solution, migrates upward through the absorber vessel, along with and as a part of the flue gas stream and, ultimately, escapes via the exit of the absorber vessel. The loss of this ammonia from the system (ammonia slip) decreases the molar concentration of ammonia in the ionic solution. As the molar concentration of ammonia decreases, so does the R value (NH₃-to-CO₂ mole ratio). This decrease in the R value corresponds to a decrease in the effectiveness of the ionic solution in capturing CO₂ from the flue gas stream.

In order to minimize the amount of ammonia slip, a final absorption stage of the CO₂ capture system may preferably be configured to operate at a low temperature (T), for example, a temperature from 0 °C up to 10 °C. This may be achieved by, for example, controlling the temperature of the ionic solution introduced into the absorber vessel. The final absorption stage may also preferably be configured to operate with ionic solution from the first sump vessel having a low ammonia-to-CO₂ mole ratio (R), for example, from 1.2 up to 2.0. Optionally, in some embodiments, the final absorption stage may be configured to operate with low R ionic solution delivered from a device for separating solids from liquid, such as a hydrocyclone. Such an arrangement may be advantageous since the low R ionic solution delivered from a device for separating solids from liquid contains reduced solids, which may further reduce plugging and deposition of solids in the final absorption stage.

Thus, in an embodiment, the absorber vessel further comprises a third absorption stage configured to receive flue gas which has passed the first and the second absorption stages and contact it with an ionic solution.

The third absorption stage may further comprise a liquid distribution device and an ionic solution delivery path configured for delivering ionic solution from the first sump vessel to the liquid distribution device. In some embodiments, the ionic solution delivery path configured for delivering ionic solution from the first sump vessel to the liquid distribution device may further comprise a device configured to reduce the amount of solids in the ionic solution.

In an embodiment, the ionic solution delivery path of the third absorption stage comprises a heat exchange device for controlling the temperature of the ionic solution delivered to the liquid distribution device of the third absorption stage. The temperature of the ionic solution delivered to the liquid distribution device may preferably be controlled to be in the range of 10 °C or lower, such as e.g. about 5 °C.

The conditions suitable for minimizing ammonia slip, i.e. low temperature and low R-value, may cause precipitation of solid ammonium bicarbonate in the absorption stage. Thus, in an embodiment, the third absorption stage may be configured for operating with an ionic solution containing solid particles.

In another aspect of the present invention, a method for removing CO₂ from a flue gas stream containing CO₂ (also referred to herein as "CO₂ capture method") is provided, the method comprising the steps of:
a) contacting a flow of a first ionic solution comprising NH₃ with a flue gas stream to remove a first portion of CO₂ from the flue gas stream,
b) collecting the used ionic solution from step a) in a first sump vessel,
c) recycling ionic solution from the first sump vessel to step a),
d) contacting a flow of a second ionic solution comprising NH₃ with the flue gas stream to remove a second portion of CO₂ from the flue gas stream,
e) collecting the used ionic solution from step d) in a second sump vessel,
f) recycling ionic solution from the second sump vessel to step d).

The method of the second aspect may advantageously be performed in a CO₂ capture system as described above in respect of the first aspect of the invention.

The disclosed CO₂ capture method allows the operating conditions of each absorption stage to be varied within a wide range. For example, one or more absorption stages may be operated under conditions resulting in the formation of solids, while one or more absorption stages are operated under conditions not resulting in precipitation of solids. The method facilitates recycling of used ionic solution within the absorber vessel since ionic solution from one or more absorption steps having similar composition and properties may be collected in a first sump vessel, while ionic solution from one or more other absorption steps having similar composition and properties, different to the composition and properties of the ionic solution collected in the first sump vessel, may be collected in a second sump vessel. For example, ionic solution from absorption steps resulting in the formation of solid ammonium carbonate and/or bicarbonate in the ionic solution may be collected in a first sump vessel, while ionic solution from absorption steps not resulting in the formation of solid ammonium carbonate and/or bicarbonate in the ionic solution may be collected in a second sump vessel.

At low temperatures, for example, 0 °C up to 20 °C, and low R values, for example, 1.2 up to 2.0 solid ammonium bicarbonate particles will precipitate from the ionic solution after it has been contacted with the flue gas stream. These solids contain very high concentrations of CO₂ (approximately 55% by weight) that has been removed from the flue gas stream by virtue of the ionic solution being placed in contact therewith. Thus, the precipitation of the solids is desired since they contain high concentrations of CO₂ and can be easily separated from the ionic solution and removed.

Thus, step a) of the method is performed under conditions such that solid ammonium bicarbonate is formed.

The first ionic solution has a NH₃-to-CO₂ mole ratio (R) in the range of 1.2 to 2.0.

In an embodiment, the method further comprises the step of adjusting the NH₃-to-CO₂ mole ratio (R) of the ionic solution in the first sump vessel to be in the range of 1.2 to 2.0.

In an embodiment, the adjustment of the NH₃-to-CO₂ mole ratio (R) is achieved by introducing NH₃ or a medium having a NH₃-to-CO₂ mole ratio (R) higher than the R of the ionic solution in the sump vessel into the ionic solution. In an embodiment, the medium may be ionic solution from the second sump vessel.

Step d) of the method is performed under conditions such that essentially no solid ammonium bicarbonate is formed.

In order to achieve CO₂ removal from the flue gas down to a low residual concentration, such as less than 10% or less than 5% of the original concentration, at least one absorption stage may be configured to operate under conditions providing high CO₂ absorption efficiency. Examples of suitable conditions promoting high CO₂ absorption efficiency include high NH₃-to-CO₂ mole ratio (R) of the ionic solution, such as an R value higher than 1.8, preferably higher than 2.0, such as in the range of 2.0 to 4.0, for example in the range of 2.0 to 2.5.

The second ionic solution has a NH₃-to-CO₂ mole ratio (R) in the range of 2.0 to 4.0.

In an embodiment, the method further comprises the step of adjusting the NH₃-to-CO₂ mole ratio (R) of the ionic solution in the second sump vessel to be in the range of 2.0 to 4.0.

In an embodiment, the adjustment of the NH₃-to-CO₂ mole ratio (R) is achieved by introducing NH₃ or a medium having a NH₃-to-CO₂ mole ratio (R) higher than the R of the ionic solution in the sump vessel into the ionic solution.

In an embodiment, the temperature of the first ionic solution in step a) is controlled to be in the range of 5 to 20 °C.

In an embodiment, the temperature of the second ionic solution in step d) is controlled to be in the range of 5 to 20 °C.

In order to minimize the amount of ammonia slip, a final absorption stage of the CO₂ capture system may preferably be configured to operate at a low temperature (T), for example, a temperature from 0 °C up to 10 °C. The final absorption stage may also preferably be configured to operate with ionic solution from the first sump vessel having a low NH₃-to-CO₂ mole ratio (R), for example, from 1.2 up to 2.0.

In an embodiment, the method further comprises the step of contacting a flow of a third ionic solution comprising NH₃ and having a NH₃-to-CO₂ mole ratio (R) in the range of 1.2 to 2.0 with the flue gas stream to remove a third portion of CO₂ from the flue gas stream. The temperature of the third ionic solution may preferably be controlled to be in the range of 10 °C or lower.

### Brief description of the drawing

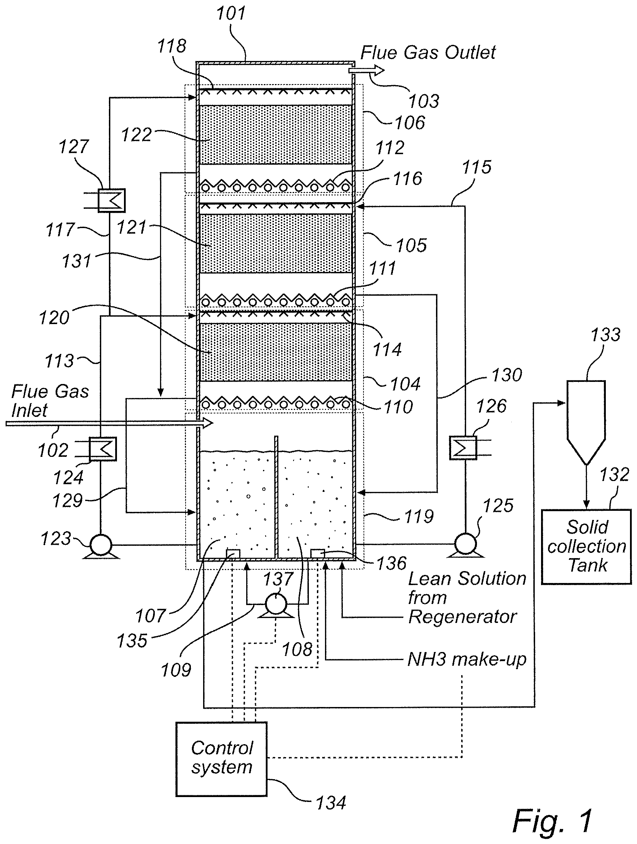

FIG. 1 is a diagram generally depicting an embodiment of a CO₂ capture system that includes a multi-stage absorber vessel with two sump vessels.

### Detailed description

One embodiment of the proposed invention is generally depicted in FIG. 1. In this embodiment, a CO₂ capture system is provided that includes three (3) absorption stages. It is, however, possible to include more or fewer absorption stages in the capture system without departing from the scope or spirit of the present invention.

Referring to FIG. 1 a single absorber vessel 101 is provided. The absorber vessel 101 is configured to receive a flue gas stream FG via an inlet 102 located near the bottom of the vessel 101 and to allow the flue gas stream FG to pass upward and through the absorber vessel 101 to exit via an outlet 103 located near the top of the vessel 101.

The flue gas stream FG entering the absorber vessel 101 will typically contain less than one percent moisture and low concentrations of SO₂, SO₃, HCl, and particulate matter (PM) which will typically be removed via air pollution control systems (not shown) upstream from the CO₂ capture system. For example, the flue gas stream will typically contain less than 50 ppmv of SO₂; less than 5 ppmv of SO₃; less than 1 ppmv of HCl and/or less than 100 mg/nm³ of PM.

The absorber vessel 101 is configured to absorb CO₂ that may be contained in a flue gas stream, using an ionic solution. In a preferred embodiment, the ionic solution may be composed of, for example, water and ammonium ions, bicarbonate ions, carbonate ions, and/or carbamate ions.

The CO₂ capture system comprises three absorption stages 104, 105 and 106, the first (104) and third (106) absorption stages being connected to a first sump vessel 107, and the second (105) absorption stages being connected to a second sump vessel 108 in a manner described in detail hereinbelow.

The CO₂ capture system comprises two separate ionic solution sump vessels 107 and 108, referred to herein as the first (107) and second (108) sump vessel. The term separate generally means that the ionic solution in the first sump vessel is not in continuous liquid contact with the ionic solution in the second sump vessel. Although the first and second sump vessels are not in continuous liquid contact, the system may further comprise a conduit 109 for transferring ionic solution from the second sump vessel 108 to the first sump vessel 107.

The first sump vessel 107 is arranged to receive used ionic solution from the first absorption stage 104 via liquid collection receptacle 110, and from the third absorption stage 106 via liquid collection receptacle 112. The second sump vessel 108 is arranged to receive used ionic solution from the second absorption stage 105 via liquid collection receptacle 111. The first sump vessel is arranged to supply ionic solution to the first absorption stage via a solution delivery path 113 and a liquid distribution device 114 and to the third absorption stage via a solution delivery path 117 and a liquid distribution device 118. The second sump vessel is arranged to supply ionic solution to the second absorption stage via a solution delivery path 115 and a liquid distribution device 116. The first and/or second sump vessels are further configured for receiving CO₂ lean ionic solution from a regenerator (not shown) and/or make-up NH3.

In the embodiment shown in FIG. 1, the first (107) and second (108) sump vessels are formed by two sub-sections of the bottom portion 119 of the absorber vessel, below the first absorption stage.

The CO₂ capture system may further comprise a control system for controlling the NH₃-to-CO₂ mole ratio (R) in the first and second sump vessel to be within a desired range. The control system may comprise sensors for automated or manual measurement of relevant parameters, such as e.g. pH value, ammonia concentration and/or CO₂ concentration, and devices, such as liquid connections, valves and pumps, configured for adjustment of such parameters, e.g., by addition of make-up NH₃ and/or removal of CO₂. Preferably, the system may comprise an automatic controller 134, by which the NH₃-to-CO₂ mole ratio is maintained at desired values in the first and second sump vessel. For example, the automatic controller 134 may be a general-purpose computer, application specific computing device or other programmable controller that receives input signals indicative of the R value from sensors 135, 136 in the first and second sump vessels 107, 108. The automatic controller 134 may provide control signals to a pump 137, control valve, or other fluid flow adjusting device, to maintain R within the first sump vessel 107 to within the desired range, and may provide control signals to the NH3 make-up supply and/or the lean solution supply from the regenerator to maintain R within the desired range in the second sump vessel 108. In an embodiment, the R value in the first sump vessel is maintained in a range of 1.2 to 2.0 by replacing a portion of the ionic solution containing solid ammonium bicarbonate with high R ionic solution from the second sump vessel via conduit 109, and the R value in the second sump vessel is maintained in a range of 2.0 to 4.0 by replacing the portion of ionic solution sent to the first sump vessel with CO₂ lean ionic solution from the regenerator and/or make-up NH₃.

Each absorption stage (104, 105 and 106) is configured to include one or more suitable gas-liquid mass transfer devices (MTD) (120, 121 and 122), a liquid distribution device (114, 116 and 118) and a solution delivery path (SDP) (113, 115 and 117).

Each mass transfer device 120, 121 and 122 is configured to contact ionic solution with the flue gas stream FG as the flue gas flows upwards through the absorber vessel 101, counter current to the ionic solution containing, for example, a dissolved and/or suspended mix of ammonium ions, carbonate ions, ammonium bicarbonate and/or carbamate ions in which the CO₂ is absorbed. Mass transfer devices (MTD) 120, 121 and 122 may be, for example, structured or random packing materials.

Liquid distribution device(s) 114, 116 and 118 are configured to introduce ionic solution into the absorber vessel 101. Each liquid distribution device may be configured as, for example, one or more spray head nozzles and/or conduit with perforations, holes and/or slots or a combination thereof.

Each SDP (113, 115 and 117) is configured to deliver a flow of ionic solution (ionic solution flow) to the respective absorption stage via a liquid distribution device (114, 116 and 118 respectively). Each SDP will preferably include one or more cooling systems, such as, for example, a heat exchange device, for cooling ionic solution pumped through the SDP. A control system is also preferably provided for controlling the flow of the ionic solution and maintaining ionic solution temperature at a predetermined level or within a predetermined temperature range. The control system may include a controller, for example a general purpose computer, an application specific computing device or other programmable controller, that receives input signals from one or more temperature sensor and provides control signals to a heat exchange device to effect cooling or heating of the ionic solution. The control system may be preferably integrated with the control system described above for controlling the R-value of the ionic solution, and the controller, e.g. computing device, may preferably be the same. With reference to FIG. 1, the first absorption stage 104 includes a SDP 113 that is composed of conduit/pipe that connects the first sump vessel 107 with liquid distribution device 114 via pump 123 and heat exchanger 124. The second absorption stage 105 includes a SDP 115 that is composed of conduit/pipe that connects a second sump vessel 108 to the liquid distribution device 116 via pump 125 and heat exchanger 126. The third absorption stage 106 includes a SDP 117 that is composed of conduit/pipe that connects the first sump vessel 107, with liquid distribution device 118 via pump 123, heat exchanger 124 and heat exchanger 127.

Each absorption stage (104, 105 and 106) may comprise a device for collecting ionic solution which has passed through the respective MTD (120, 121 and 122). Each such liquid collection receptacle 110, 111 and 112 may be configured to collect all or a portion of the liquid which passes through the respective MTD. Each liquid collection receptacle may for example be configured to collect substantially all, i.e. about 95 % or more, such as 98 % or more of the ionic solution which passes through the respective MTD. Alternatively, a major portion of the ionic solution which passes through the respective MTD may be collected, for example more than 50 %, such as more than 70 % or more than 90 % of the ionic solution. The liquid collection receptacles may preferably be arranged or configured such that flue gas rising up through the absorber vessel 101 may pass through or alongside the liquid collection receptacles. The liquid collection receptacles may for example comprise a sloped collection tray or bubble cap tray. The liquid collection receptacles may further comprise one or more liquid outlets configured for removal of liquid collected by the liquid collection receptacles. The liquid collection receptacle 110 of the first absorption stage is connected to the first sump vessel 107 via conduit 129 which allows used ionic solution collected by the liquid collection receptacle to be directed to the first sump vessel to be recycled. The liquid collection receptacle 111 of the second absorption stage is connected to the second sump vessel 108 via conduit 130 which allows used ionic solution collected by the liquid collection receptacle to be directed to the second sump vessel to be recycled. The liquid collection receptacle 112 of the third absorption stage is connected to the first sump vessel 107 via conduit 131 which allows used ionic solution collected by the liquid collection receptacle to be directed to the first sump vessel to be recycled.

The liquid collection receptacles may further comprise a flush system (not shown) for preventing solids accumulation and deposit formation. In some embodiments, liquid which has passed through the MTD of the first absorption stage may be collected directly in a bottom portion of the absorber vessel. In such embodiments, no further liquid collection receptacle may be required for the first absorption stage.

The first absorption stage 104 is configured to contact a low R ionic solution received from the first sump vessel 107 via SDP 113 with the flue gas stream. This ionic solution is pumped from the first sump vessel 107 via pump 123 to the liquid distribution device 114, which sprays the ionic solution downward and onto the mass transfer device 120. In this way the flue gas stream FG comes into contact with the ionic solution sprayed from liquid distribution device 114. The temperature of the ionic solution at absorption stage 104 is preferably controlled to be in a range from 5 °C to 20 °C or higher. CO₂ captured from the FG at absorption stage 104 forms ionic solution with precipitation of ammonium carbonate and bicarbonate. After the ionic solution has been contacted with the flue gas stream FG it is rich in CO₂ (rich solution). This rich in CO₂ solution is discharged from absorption stage 104 to the first sump vessel 107 via conduit 129. Solids collected in the first sump vessel 107 may be separated and transferred to a solid collection tank 132. A portion of the ionic solution in the first sump vessel 107 may be pumped to a regenerator system (not shown) to increase the ammonia-to-CO₂ mole ratio (R) of the liquid.

The MTD 120 of the first absorption stage may preferably be configured to be less sensitive to plugging by solid particles. For example, the type and size of the packing material of the MTD 120 may be selected for reduced sensitivity towards plugging and deposition of solid particles. The person skilled in the art may readily select a suitable packing material for operation with a liquid comprising particles of known size, shape and quantity.

The second absorption stage 105 is configured to operate at a high level of CO₂ capture efficiency. In one embodiment, the absorption stage 105 is configured to capture, for example, 50-90 % of the CO₂ that may be contained in the flue gas stream FG. Here, high R, CO₂ lean ionic solution from the second sump vessel 108 is sprayed via liquid distribution device 116, onto the MTD 121. The high R, CO₂ lean solution sprayed via the spray system 116 is contacted with the flue gas stream FG as it flows from the first absorption stage 104 upward through the MTD 121 of the second absorption stage.

The MTD 121 of the second absorption stage may preferably be configured to provide CO₂ capture efficiency. The type and size of the packing material of the MTD 121 of the second absorption stage may be selected for providing a high surface contact area between the flue gas FG stream and the ionic solution. A packing material suitable for use in the MTD of the second absorption stage may readily be selected by a person skilled in the art.

The absorber vessel 101 may optionally further comprise a third absorption stage 106 for further removal of CO₂ from the flue gas and for reduction of ammonia slip from the previous absorption stages.

The flue gas rising upward in the absorption vessel 101 from the second absorption stage 105 contains a low concentration of CO₂ (for example 10% or less of the concentration in the FG inlet) and a relatively high concentration of NH₃ (for example from 5000 ppm up to 30000 ppm). The high concentration of ammonia in the flue gas (ammonia slip) from the second absorption stage 105 is a result of the high R of the ionic solution in the second absorption stage 105. A large portion of the ammonia that has evaporated in the second absorption stage 105 may be re-captured back into the ionic solution via a third absorption stage 106, which preferably operates at a lower R value and lower temperature.

In the third absorption stage 106, a relatively small flow of ionic solution having a low R (for example less than 2.0, such as in the range of 1.2-2.0) and low temperature (for example less than 10 °C and preferably about 5 °C) is sprayed via liquid distribution device 118 onto the MTD 122 wherein it is contacted with the flue gas stream FG as it flows upward through the MTD 122. The ionic solution discharged from the third absorption stage 106 may preferably be collected in the first sump vessel 107 via conduit 131.

The MTD 122 of the third absorption stage may preferably be configured to be less sensitive to plugging by solid particles. For example, the type and size of the packing material of the MTD 122 may be selected for reduced sensitivity towards plugging and deposition of solid particles. The person skilled in the art may readily select a suitable packing material for operation with a liquid comprising particles of known size, shape and quantity.

The absorber vessel 101 may be configured to provide for circulation of ionic solution collected at the bottom of the first sump vessel 107 to a solid collection tank 132 optionally via a hydrocyclone 133. The hydrocyclone may be used increase the solids content of the ionic solution before it is sent to the solid collection tank132. The overflow from the hydrocyclone containing reduced quantity of solids may be sent to the third absorption stage.

Each of the absorption stages 104, 105 and 106 are configured to carry out a particular phase of the CO₂ absorption process. For example, stage 104 is configured to carry out phase 1 of the process whereby a portion of the CO₂ contained in the flue gas is captured. Stage 105 is configured to carry out phase 2 of the process whereby an additional portion of the CO₂ contained in the flue gas is captured. Stage 106 is configured to carry out phase 3 of the process. In phase 3 an additional portion of the CO₂ contained in the flue gas is captured.

In a preferred embodiment, between 40 % and 90 % of the CO₂ contained in the flue gas stream FG when it enters the inlet 102 will be removed from the flue gas stream after being subjected to phases 1-3 and before it exits the exit 103. Each phase may or may not be carried out in a predetermined sequence.

In phase 1 of the CO₂ absorption process a portion of the CO₂ contained in the flue gas stream is removed via contacting ionic solution from the first sump vessel 107 with the flue gas stream. The temperature of the ionic solution during phase 1 is controlled to be higher than the temperature of the ionic solution at phase 2 or phase 3 of the CO₂ absorption process. For example, at phase 1, the temperature of the ionic solution is controlled to be in the range of 5 °C to 20 °C. The R value of the ionic solution in phase 1 is low, for example, 1.2 to 2.0.

During phase 1 solids of ammonium carbonate and bicarbonate containing high concentrations of CO₂ are allowed to precipitate from the ionic solution.

The CO₂ rich ionic solution, possibly comprising solids of ammonium carbonate and bicarbonate, is collected via the liquid collection receptacle and transferred to the first sump vessel 107.

The solids may subsequently be separated from the ionic solution and removed via, for example, a hydrocyclone. Once the solids are removed from the ionic solution, the ionic solution is leaner in CO₂ (i.e. contains less CO₂) and can be used to capture more CO₂ from a flue gas stream.

The NH₃-to-CO₂ mole ratio (R) of the ionic solution in first sump vessel is controlled to be within a range of 1.2 to 2.0 by addition of make-up NH₃, which may be supplied, e.g. in the form of pure NH₃ or an solution of NH₃, such as CO₂ lean ionic solution from the regenerator. In an embodiment, make-up NH₃ may be supplied in the form of the second ionic solution which has a higher R value than the first ionic solution. The NH₃-to-CO₂ mole ratio of the ionic solution in first sump vessel may further be controlled by removal of solid ammonium carbonate and bicarbonate which has accumulated in the vessel. The solid ammonium bicarbonate is high in CO₂, and removal thereof results in an increase of the R value of the first ionic solution.

The temperature of the ionic solution in phase 2 is preferably controlled to be in a range from 5 °C to 20 °C and the R value of the ionic solution is higher than in phase 1, for example in a range of 2.0 to 4.0 and preferably in a range of 2.0 to 2.5. The ionic solution in phase 2 is preferably provided from the second sump vessel. The ionic solution in phase 2 is highly reactive and can capture a significant portion of the CO₂ content of the flue gas. However, the reactive ionic solution in phase 2 has relatively high vapor pressure of ammonia which results in a relatively high ammonia concentration in the flue gas leaving phase 2 and flowing to the third stage 106 (phase 3) of the CO₂ absorption process.

The CO₂ rich second ionic solution from phase 2 is collected via the liquid collection receptacle of the second absorption stage and transferred to the second sump vessel 108.

The NH₃-to-CO₂ mole ratio (R) of the ionic solution in second sump vessel is controlled to be within a range of 2.0 to 4.0 by addition of make-up NH₃, which may be supplied, e.g. in the form of pure NH₃ or a solution of NH₃, such as CO₂ lean ionic solution from the regenerator.

During phase 3 loss of gaseous ammonia is minimized by controlling the temperature and the R value of the ionic solution so as to lower the vapor pressure of the ammonia from the ionic solution and thus to reduce the ammonia concentration in the gas phase of phase 3. By reducing ammonia vapor pressure and keeping most of the ammonia as part of the liquid ionic solution, ammonia losses from the system will be minimized. This reduction in ammonia slip helps keep the NH₃-to-CO₂ mole ratio (R) at a higher level, for example, from 1.2 to 2.0. As a result, the effectiveness of the system in removing CO₂ from the flue gas stream is preserved or otherwise not deteriorated. The temperature of the ionic solution at phase 3 is controlled to be, for example, in a range of from 0 °C to 10 °C.

Controlling the NH₃-to-CO₂ mole ratio (R) in the first and second sump vessel to be within a desired range may be achieved by automated or manual measurement of relevant parameters, such as e.g. pH value, ammonia concentration and/or CO₂ concentration, and adjustment of such parameters by addition of make-up NH₃ and/or removal of CO₂. Preferably, the system may comprise an automatic controller 134, by which the NH₃-to-CO₂ mole ratio is maintained at desired values in the first and second sump vessel. In an embodiment, R in the first sump vessel is maintained in a range of 1.2 to 2.0 by replacing a portion of the ionic solution containing solid ammonium bicarbonate with high R ionic solution from the second sump vessel, and R in the second sump vessel is maintained in a range of 2.0 to 4.0 by replacing the portion of ionic solution sent to the first sump vessel with CO₂ lean ionic solution from the regenerator and/or make-up NH₃. For example, the automatic controller 134 may be a general-purpose computer, application specific computing device or other programmable controller that receives input signals indicative of the R value from sensors 135, 136 in the first and second sump vessels 107, 108. The automatic controller 134 may provide control signals to a pump 137, control valve, or other fluid flow adjusting device, to maintain R within the first sump vessel 107 to within the desired range, and may provide control signals to the NH3 make-up supply and/or the lean solution supply from the regenerator to maintain R within the desired range in the second sump vessel 108.

The heat rejected from the first absorption stage 104, as well as the second absorption stage 105, occur at a relatively high temperature (up to 5 °C-20 °C). This cooling can be achieved with seawater or cooling tower water if ambient conditions allow it, hence reducing the overall demand for chilling the solution significantly. When chilled water is used, the power consumption for chilling the higher temperature ionic solution is much lower than the power required for chilling the lower temperature ionic solution.

## Claims

1. Method for removing CO₂ from a flue gas stream containing CO₂, the method comprising the steps of:
a) contacting a flow of a first ionic solution comprising NH₃ with a flue gas stream to remove a first portion of CO₂ from the flue gas stream,
b) collecting the used ionic solution from step a) in a first sump vessel (107),
c) recycling ionic solution from said first sump vessel (107) to step a),
d) contacting a flow of a second ionic solution comprising NH₃ with the flue gas stream to remove a second portion of CO₂ from the flue gas stream,
e) collecting the used ionic solution from step d) in a second sump vessel (108), and
f) recycling ionic solution from said second sump vessel (108) to step d), wherein
step a) is performed under conditions such that solid ammonium bicarbonate is formed and said first ionic solution has a NH₃-to-CO₂ mole ratio (R) in the range of 1.2 to 2.0; and
step d) is performed under conditions such that essentially no solid ammonium bicarbonate is formed and wherein said second ionic solution has a NH₃-to-CO₂ mole ratio (R) in the range of 2.0 to 4.0.

2. The method according to claim 1, further comprising the step of adjusting the NH₃-to-CO₂ mole ratio (R) of the ionic solution in the first sump vessel (107) to be in the range of 1.2 to 2.0.

3. The method according to claim 2, wherein the adjustment of the NH3-to-CO₂ mole ratio (R) is achieved by introducing NH3 and/or a medium having a NH₃-to-CO₂ mole ratio (R) higher than the R of the ionic solution in the first sump vessel (107) into the first sump vessel (107).

4. The method according to claim 3, wherein said medium is ionic solution from the second sump vessel (108).

5. The method according to claim 1, further comprising the step of adjusting the NH₃-to-CO₂ mole ratio (R) of the ionic solution in the second sump vessel (108) to be in the range of 2.0 to 4.0.

6. The method according to claim 5, wherein the adjustment of the NH₃-to-CO₂ mole ratio (R) is achieved by introducing NH₃ and/or a medium having a NH₃-to-CO₂ mole ratio (R) higher than the R of the ionic solution in the second sump vessel (108) into the second sump vessel (108).

7. The method according to claim 1, wherein the temperature of the first ionic solution in step a) is controlled to be in the range of 5 to 20 °C.

8. The method according to claim 1, wherein the temperature of the second ionic solution in step d) is controlled to be in the range of 5 to 20 °C.

9. The method according to claim 1, further comprising the step of contacting a flow of a third ionic solution comprising NH₃ and having a NH₃-to-CO₂ mole ratio (R) in the range of 1.2 to 2.0 with the flue gas stream to remove a third portion of CO₂ from the flue gas stream.

10. The method according to claim 9, wherein said flow of a third ionic solution is delivered from the first sump vessel (107).

11. The method according to claim 9, wherein said flow of a third ionic solution is delivered via a device (133) configured to reduce the amount of solids in the ionic solution.

12. The method according to claim 9, wherein the temperature of the third ionic solution is controlled to be in the range of 10 °C or lower.

13. A system for removing carbon dioxide from a flue gas stream according to the method of claim 1, the system comprising:
an absorber vessel (101) configured to receive a flue gas stream,
said absorber vessel (101) comprising
a first absorption stage (104) configured to receive the flue gas stream and
contact it with a first ionic solution,
a second absorption stage (105) configured to receive flue gas which has passed the first absorption stage (104) and contact it with a second ionic solution,
a first sump vessel (107), and a
second sump vessel (108),
wherein said first absorption stage (104) comprises a liquid collection receptacle (110) arranged to collect ionic solution from the first absorption stage (104) and deliver it to the first sump vessel (107) for recirculation to the first absorption stage (104), and said second absorption stage (105) comprises a liquid collection receptacle (111) arranged to collect ionic solution from the second absorption stage (105) and deliver it to the second sump vessel (108) for recirculation to the second absorption stage (105),
**characterised in that**
the system further comprises a control system (134) configured to maintain the NH₃-to-CO₂ mole ratio (R) of the ionic solution in the first sump vessel (107) in a range of 1.2 to 2.0 and to maintain the NH₃-to-CO₂ mole ratio (R) of the ionic solution in the second sump vessel (108) in a range of 2.0 to 4.0; and
wherein the first absorption stage (104) is configured for operating with an ionic solution containing solid particles.

14. The system according to claim 13, wherein said absorber vessel (101) comprises a bottom section (119), in which a first and a second sump vessel (107, 108) is formed by two sub-sections of said bottom section (119).

15. The system according to claim 13, wherein said control system (134) comprises a device (137) configured to introduce NH₃ or a medium having a NH₃-to-CO₂ mole ratio (R) higher than the R of the ionic solution in the sump vessel (107, 108) into the ionic solution.

16. The system according to claim 13, wherein the first absorption stage (104) further comprises
a liquid distribution device (114) and
an ionic solution delivery path (113) configured for delivering ionic solution from the first sump vessel (107) to said liquid distribution device (114), and wherein the second absorption stage (105) further comprises
a liquid distribution device (116) and
an ionic solution delivery path (115) configured for delivering ionic solution from the second sump vessel (108) to said liquid distribution device (116).

17. The system according to claim 16, wherein the ionic solution delivery path (113) of the first absorption stage (104) comprises a heat exchange device (124) for controlling the temperature of the ionic solution delivered to the liquid distribution device (114) of the first absorption stage (104).

18. The system according to claim 16, wherein the temperature of the ionic solution delivered to the liquid distribution device (114) is controlled to be in the range of 5 to 20 °C.

19. The system according to claim 16, wherein the ionic solution delivery path of the second absorption stage (105) comprises a heat exchange device (126) for controlling the temperature of the ionic solution delivered to the liquid distribution device (116) of the second absorption stage (105).

20. The system according to claim 16, wherein the temperature of the ionic solution delivered to the liquid distribution device (116) is controlled to be in the range of 5 to 20 °C.

21. The system according to claim 13, wherein said absorber vessel (101) further comprises a third absorption stage (106) configured to receive flue gas which has passed the first and the second absorption stages (104, 105) and contact it with an ionic solution.

22. The system according to claim 21, wherein said third absorption stage (106) comprises a liquid collection receptacle (112) arranged to collect ionic solution from the third absorption stage (108) and deliver it to the first sump vessel (107).

23. The system according to claim 21, wherein the third absorption stage (106) comprises
a liquid distribution device (118), and
an ionic solution delivery path (117) configured for delivering ionic solution from the first sump vessel (107) to said liquid distribution device (118).

24. The system according to claim 21, wherein the ionic solution delivery path (117) of the third absorption stage (106) comprises a heat exchange device (127) for controlling the temperature of the ionic solution delivered to a liquid distribution device (118) of the third absorption stage (106).

25. The system according to claim 21, wherein the temperature of the ionic solution delivered to the liquid distribution device (118) is controlled to be in the range of 10 °C or lower.

26. The system according to claim 21, wherein the third absorption stage (106) is configured for operating with an ionic solution containing solid particles.

## Patentansprüche

1. Verfahren zur Entfernung von CO₂ aus einem CO₂ enthaltenden Rauchgasstrom, wobei das Verfahren die folgenden Schritte umfasst:
a) Inkontaktbringen einer Strömung einer ersten ionischen Lösung, die NH₃ umfasst, mit einem Rauchgasstrom zur Entfernung eines ersten Anteils an CO₂ aus dem Rauchgasstrom,
b) Auffangen der benutzten ionischen Lösung aus Schritt a) in einem ersten Sammelbehälter (107),
c) Rückführen der ionischen Lösung aus dem ersten Sammelbehälter (107) zu Schritt a),
d) Inkontaktbringen einer Strömung einer zweiten ionischen Lösung, die NH₃ umfasst, mit dem Rauchgasstrom zur Entfernung eines zweiten Anteils an CO₂ aus dem Rauchgasstrom,
e) Auffangen der benutzten ionischen Lösung aus Schritt d) in einem zweiten Sammelbehälter (108), und
f) Rückführen der ionischen Lösung aus dem zweiten Sammelbehälter (108) zu Schritt d),
wobei
Schritt a) unter derartigen Bedingungen durchgeführt wird, dass festes Ammoniumbicarbonat gebildet wird und die erste ionische Lösung ein NH₃-zu-Co₂-Molverhältnis (R) im Bereich von 1,2 bis 2,0 aufweist; und
Schritt d) unter derartigen Bedingungen durchgeführt wird, dass im Wesentlichen kein festes Ammoniumbicarbonat gebildet wird und wobei die zweite ionische Lösung ein NH₃-zu-Co₂-Molverhältnis (R) im Bereich von 2,0 bis 4,0 aufweist.

2. Verfahren nach Anspruch 1, ferner umfassend den Schritt der Einstellung des NH₃-zu-Co₂-Molverhältnisses (R) der ionischen Lösung im ersten Sammelbehälter (107) auf einen Bereich von 1,2 bis 2,0.

3. Verfahren nach Anspruch 2, wobei die Einstellung des NH₃-zu-Co₂-Molverhältnisses (R) durch Einleitung von NH₃ und/oder eines Mediums mit einem NH₃-zu-Co₂-Molverhältnis (R), das höher als das R der ionischen Lösung im ersten Sammelbehälter (107) ist, in den ersten Sammelbehälter (107) erfolgt.

4. Verfahren nach Anspruch 3, wobei das Medium eine ionische Lösung aus dem zweiten Sammelbehälter (108) ist.

5. Verfahren nach Anspruch 1, ferner umfassend den Schritt der Einstellung des NH₃-zu-Co₂-Molverhältnisses (R) der ionischen Lösung im zweiten Sammelbehälter (108) auf einen Bereich von 2,0 bis 4,0.

6. Verfahren nach Anspruch 5, wobei die Einstellung des NH₃-zu-Co₂-Molverhältnisses (R) durch Einleitung von NH₃ und/oder eines Mediums mit einem NH₃-zu-Co₂-Molverhältnisse (R), das höher als das R der ionischen Lösung im zweiten Sammelbehälter (108) ist, in den zweiten Sammelbehälter (107) erfolgt.

7. Verfahren nach Anspruch 1, wobei die Temperatur der ersten ionischen Lösung in Schritt a) so kontrolliert wird, dass sie im Bereich von 5 bis 20°C liegt.

8. Verfahren nach Anspruch 1, wobei die Temperatur der zweiten ionischen Lösung in Schritt d) so kontrolliert wird, dass sie im Bereich von 5 bis 20°C liegt.

9. Verfahren nach Anspruch 1, ferner umfassend den Schritt des Inkontaktbringens einer Strömung einer dritten ionischen Lösung, die NH₃ umfasst und ein NH₃-zu-Co₂-Molverhältnis (R) im Bereich von 1,2 bis 2,0 aufweist, mit dem Rauchgasstrom zur Entfernung eines dritten Anteils an CO₂ aus dem Rauchgasstrom.

10. Verfahren nach Anspruch 9, wobei die Strömung einer dritten ionischen Lösung vom ersten Sammelbehälter (107) abgegeben wird.

11. Verfahren nach Anspruch 9, wobei die Strömung einer dritten ionischen Lösung über eine Vorrichtung (133), die zur Reduzierung der Feststoffmenge in der ionischen Lösung ausgelegt ist, abgegeben wird.

12. Verfahren nach Anspruch 9, wobei die Temperatur der dritten ionischen Lösung so kontrolliert wird, dass sie im Bereich von 10°C oder niedriger liegt.

13. System zur Entfernung von Kohlendioxid aus einem Rauchgasstrom gemäß dem Verfahren nach Anspruch 1, wobei das System das Folgende umfasst:
ein Absorptionsgefäß (101), das zur Aufnahme eines Rauchgasstroms ausgelegt ist,
wobei das Absorptionsgefäß (101) das Folgende umfasst
eine erste Absorptionsstufe (104), die dazu ausgelegt ist, den Rauchgasstrom aufzunehmen und mit einer ersten ionischen Lösung in Kontakt zu bringen,
eine zweite Absorptionsstufe (105), die dazu ausgelegt ist Rauchgas, das die erste Absorptionsstufe (104) passiert hat, aufzunehmen und mit einer zweiten ionischen Lösung in Kontakt zu bringen,
einen ersten Sammelbehälter (107), und
einen zweiten Sammelbehälter (108),
wobei die erste Absorptionsstufe (104) einen Flüssigkeitsauffangbehälter (110) umfasst, der dazu angeordnet ist, ionische Lösung von der ersten Absorptionsstufe (104) zu sammeln und diese zur Rezirkulation zur ersten Absorptionsstufe (104) an den ersten Sammelbehälter (107) abzugeben, und wobei die zweite Absorptionsstufe (105) einen Flüssigkeitsauffangbehälter (111) umfasst, der dazu angeordnet ist, ionische Lösung von der zweiten Absorptionsstufe (105) zu sammeln und diese zur Rezirkulation zur zweiten Absorptionsstufe (105) an den zweiten Sammelbehälter (108) abzugeben,
**dadurch gekennzeichnet, dass**
das System ferner ein Steuersystem (134) umfasst, das dazu ausgelegt ist, das NH₃-zu-Co₂-Molverhältnis (R) der ionischen Lösung im ersten Sammelbehälter (107) in einem Bereich von 1,2 zu 2,0 aufrechtzuerhalten und das NH₃-zu-Co₂-Molverhältnis (R) der ionischen Lösung im zweiten Sammelbehälter (108) in einem Bereich von 2,0 bis 4,0 aufrechtzuerhalten; und
wobei die erste Absorptionsstufe (104) für den Betrieb mit einer ionischen Lösung, die feste Partikel enthält, ausgelegt ist.

14. System nach Anspruch 13, wobei das Absorptionsgefäß (101) einen Bodenabschnitt (119) umfasst, wobei ein erster und ein zweiter Sammelbehälter (107, 108) von zwei Teilabschnitten des Bodenabschnitts (119) ausgebildet werden.

15. System nach Anspruch 13, wobei das Steuersystem (134) eine Vorrichtung (137) umfasst, die zur Einleitung von NH₃ und/oder eines Mediums mit einem NH₃-zu-Co₂-Molverhältnis (R), das höher als das R der ionischen Lösung im Sammelbehälter (107, 108) ist, in die ionische Lösung ausgelegt ist.

16. System nach Anspruch 13, wobei die erste Absorptionsstufe (104) ferner das Folgende umfasst:
eine Flüssigkeitsverteilungsvorrichtung (114) und
einen Abgabeweg (113) für ionische Lösung, der zur Abgabe von ionischer Lösung aus dem ersten Sammelbehälter (107) an die Flüssigkeitsverteilungsvorrichtung (114) ausgelegt ist, und wobei die zweite Absorptionsstufe (105) ferner das Folgende umfasst:
eine Flüssigkeitsverteilungsvorrichtung (116) und
einen Abgabeweg (115) für ionische Lösung, der zur Abgabe von ionischer Lösung aus dem zweiten Sammelbehälter (108) an die Flüssigkeitsverteilungsvorrichtung (116) ausgelegt ist.

17. System nach Anspruch 16, wobei der Abgabeweg (113) für ionische Lösung der ersten Absorptionsstufe (104) eine Wärmeaustauschervorrichtung (124) zur Kontrolle der Temperatur der ionischen Lösung, die an die Flüssigkeitsverteilungsvorrichtung (114) der ersten Absorptionsstufe (104) abgegeben wird, umfasst.

18. System nach Anspruch 16, wobei die Temperatur der ionischen Lösung, die an die Flüssigkeitsverteilungsvorrichtung (114) abgegeben wird, so kontrolliert wird, dass sie im Bereich von 5 bis 20°C liegt.

19. System nach Anspruch 16, wobei der Abgabeweg für ionische Lösung der zweiten Absorptionsstufe (105) eine Wärmeaustauschervorrichtung (126) zur Kontrolle der Temperatur der ionischen Lösung, die an die Flüssigkeitsverteilungsvorrichtung (116) der zweiten Absorptionsstufe (105) abgegeben wird, umfasst.

20. System nach Anspruch 16, wobei die Temperatur der ionischen Lösung, die an die Flüssigkeitsverteilungsvorrichtung (116) abgegeben wird, so kontrolliert wird, dass sie im Bereich von 5 bis 20°C liegt.

21. System nach Anspruch 13, wobei das Absorptionsgefäß (101) ferner eine dritte Absorptionsstufe (106) umfasst, die dazu ausgelegt ist Rauchgas, das die erste und die zweite Absorptionsstufe (104, 105) passiert hat, aufzunehmen und mit einer ionischen Lösung in Kontakt zu bringen.

22. System nach Anspruch 21, wobei die dritte Absorptionsstufe (106) einen Flüssigkeitsauffangbehälter (112) umfasst, der dazu angeordnet ist, ionische Lösung von der dritten Absorptionsstufe (108) zu sammeln und diese an den ersten Sammelbehälter (107) abzugeben.

23. System nach Anspruch 21, wobei die dritte Absorptionsstufe (106) das Folgende umfasst:
eine Flüssigkeitsverteilungsvorrichtung (118), und
einen Abgabeweg (117) für ionische Lösung, der zur Abgabe von ionischer Lösung aus dem ersten Sammelbehälter (107) an die Flüssigkeitsverteilungsvorrichtung (118) ausgelegt ist.

24. System nach Anspruch 21, wobei der Abgabeweg (117) für ionische Lösung der dritten Absorptionsstufe (106) eine Wärmeaustauschervorrichtung (127) zur Kontrolle der Temperatur der ionischen Lösung, die an eine Flüssigkeitsverteilungsvorrichtung (118) der dritten Absorptionsstufe (106) abgegeben wird, umfasst.

25. System nach Anspruch 21, wobei die Temperatur der ionischen Lösung, die an die Flüssigkeitsverteilungsvorrichtung (118) abgegeben wird, so kontrolliert wird, dass sie im Bereich von 10°C oder niedriger liegt.

26. System nach Anspruch 21, wobei die dritte Absorptionsstufe (106) für den Betrieb mit einer ionischen Lösung, die feste Partikel enthält, ausgelegt ist.

## Revendications

1. Procédé pour éliminer le CO₂ d'un flux de gaz de combustion contenant du CO₂ le procédé comprenant les étapes consistant :
a) à mettre en contact un flux d'une première solution ionique contenant du NH₃ avec un flux de gaz de combustion afin d'éliminer une première partie du CO₂ du flux de gaz de combustion,
b) à recueillir la solution ionique utilisée au cours de l'étape a) dans un premier récipient collecteur (107),
c) à recycler la solution ionique en provenance dudit premier récipient collecteur (107) à l'étape a),
d) à mettre en contact un flux d'une deuxième solution ionique contenant du NH₃ avec le flux de gaz de combustion pour éliminer une deuxième partie du CO₂ du flux de gaz de combustion,
e) à recueillir la solution ionique utilisée au cours de l'étape d) dans un second récipient collecteur (108), et
f) à recycler la solution ionique en provenance dudit second récipient collecteur (108) à l'étape d),
dans lequel
l'étape a) est réalisée dans des conditions telles que du bicarbonate d'ammonium solide soit formé et que ladite première solution ionique présente un rapport molaire entre le NH₃ et le CO₂ (R) dans la plage comprise entre 1,2 et 2,0 ; et
l'étape d) est réalisée dans des conditions telles qu'il n'y ait essentiellement pas de bicarbonate d'ammonium solide qui est formé et dans lequel ladite deuxième solution ionique présente un rapport molaire entre le NH₃ et le CO₂ (R) dans la plage comprise entre 2,0 et 4,0.

2. Procédé selon la revendication 1, comprenant en outre l'étape consistant à ajuster le rapport molaire entre le NH₃ et le CO₂ (R) de la solution ionique dans le premier récipient collecteur (107) de sorte qu'il soit dans la plage comprise entre 1,2 et 2,0.

3. Procédé selon la revendication 2, dans lequel l'ajustement du rapport molaire entre le NH₃ et le CO₂ (R) est obtenu en introduisant du NH3et/ou un milieu ayant un rapport molaire entre le NH₃ et le CO₂ (R) supérieur au rapport R de la solution ionique dans le premier récipient collecteur (107) dans le premier récipient collecteur (107).

4. Procédé selon la revendication 3, dans lequel ledit milieu est une solution ionique provenant du second récipient collecteur (108).

5. Procédé selon la revendication 1, comprenant en outre l'étape consistant à ajuster le rapport molaire entre le NH₃ et le CO₂ (R) de la solution ionique dans le second récipient collecteur (108) de sorte qu'il soit dans la plage comprise entre 2,0 et 4,0.

6. Procédé selon la revendication 5, dans lequel l'ajustement du rapport molaire entre le NH₃ et le CO₂ (R) est obtenu en introduisant du NH₃ et/ou un milieu ayant un rapport molaire entre le NH₃ et le CO₂ (R) supérieur au rapport R de la solution ionique dans le second récipient collecteur (108) dans le second récipient collecteur (108).

7. Procédé selon la revendication 1, dans lequel la température de la première solution ionique à l'étape a) est régulée de sorte à être dans la plage comprise entre 5 et 20 °C.

8. Procédé selon la revendication 1, dans lequel la température de la deuxième solution ionique à l'étape d) est régulée de sorte à être dans la plage comprise entre 5 et 20 °C.

9. Procédé selon la revendication 1, comprenant en outre l'étape consistant à mettre en contact un flux d'une troisième solution ionique contenant du NH₃ et ayant un rapport molaire entre le NH₃ et le CO₂ (R) dans la plage comprise entre 1,2 et 2,0 avec le flux de gaz de combustion afin d'éliminer une troisième partie du CO₂ du flux de gaz de combustion.

10. Procédé selon la revendication 9, dans lequel ledit flux d'une troisième solution ionique est délivré depuis le premier récipient collecteur (107).

11. Procédé selon la revendication 9, dans lequel ledit flux d'une troisième solution ionique est délivré, par le biais d'un dispositif (133) configuré pour réduire la quantité de matières solides dans la solution ionique.

12. Procédé selon la revendication 9, dans lequel la température de la troisième solution ionique est régulée de sorte à être dans la plage égale ou inférieure à 10 °C.

13. Système pour éliminer le dioxyde de carbone d'un flux de gaz de combustion selon le procédé de la revendication 1, le système comprenant :
un récipient d'absorbeur (101) configuré pour recevoir un flux de gaz de combustion,
ledit récipient d'absorbeur (101) comprenant
un premier étage d'absorption (104) configuré pour recevoir le flux de gaz de combustion et pour le mettre en contact avec une première solution ionique,
un deuxième étage d'absorption (105) configuré pour recevoir le flux de gaz de combustion qui a passé le premier étage d'absorption (104) et pour le mettre en contact avec une deuxième solution ionique,
un premier récipient collecteur (107) et
un second récipient collecteur (108),
dans lequel ledit premier étage d'absorption (104) comprend un réceptacle de collecte de liquide (110) conçu pour collecter une solution ionique en provenance du premier étage d'absorption (104) et pour la délivrer au premier récipient collecteur (107) pour une recirculation au premier étage d'absorption (104), et ledit deuxième étage d'absorption (105) comprend un réceptacle de collecte de liquide (111) conçu pour collecter une solution ionique en provenance du deuxième étage d'absorption (105) et pour la délivrer au second récipient collecteur (108) pour une recirculation au deuxième étage d'absorption (105),
**caractérisé en ce que**
le système comprend en outre un système de commande (134) configuré pour garder le rapport molaire entre le NH₃ et le CO₂ (R) de la solution ionique dans le premier récipient collecteur (107) dans une plage comprise entre 1,2 et 2,0 et pour garder le rapport molaire entre le NH₃ et le CO₂ (R) de la solution ionique dans le second récipient collecteur (108) dans une plage comprise entre 2,0 et 4,0 ; et
dans lequel le premier étage d'absorption (104) est configuré pour fonctionner avec une solution ionique contenant des particules solides.

14. Système selon la revendication 13, dans lequel ledit récipient d'absorbeur (101) comprend une section inférieure (119), dans laquelle un premier et un second récipient collecteur (107, 108) sont formés par deux sous-sections de ladite section inférieure (119).

15. Système selon la revendication 13, dans lequel ledit système de commande (134) comprend un dispositif (137) configuré pour introduire du NH₃ ou un milieu ayant un rapport molaire entre le NH₃ et le CO₂ (R) supérieur au rapport R de la solution ionique dans le récipient collecteur (107, 108) dans la solution ionique.

16. Système selon la revendication 13, dans lequel le premier étage d'absorption (104) comprend en outre
un dispositif de distribution de liquide (114) et
un trajet de délivrance de solution ionique (113) configuré pour délivrer une solution ionique depuis le premier récipient collecteur (107) audit dispositif de distribution de liquide (114), et
dans lequel le deuxième étage d'absorption (105) comprend en outre
un dispositif de distribution de liquide (116) et
un trajet de délivrance de solution ionique (115) configuré pour délivrer une solution ionique depuis le second récipient collecteur (108) audit dispositif de distribution de liquide (116).

17. Système selon la revendication 16, dans lequel le trajet de délivrance de solution ionique (113) du premier étage d'absorption (104) comprend un dispositif d'échange de chaleur (124) pour réguler la température de la solution ionique délivrée au dispositif de distribution de liquide (114) du premier étage d'absorption (104).

18. Système selon la revendication 16, dans lequel la température de la solution ionique délivrée au dispositif de distribution de liquide (114) est régulée de sorte à être dans la plage comprise entre 5 et 20 °C.

19. Système selon la revendication 16, dans lequel le trajet de délivrance de solution ionique du deuxième étage d'absorption (105) comprend un dispositif d'échange de chaleur (126) pour réguler la température de la solution ionique délivrée au dispositif de distribution de liquide (116) du deuxième étage d'absorption (105).

20. Système selon la revendication 16, dans lequel la température de la solution ionique délivrée au dispositif de distribution de liquide (116) est régulée de sorte à être dans la plage comprise entre 5 et 20 °C.

21. Système selon la revendication 13, dans lequel ledit récipient d'absorbeur (101) comprend en outre un troisième étage d'absorption (106) configuré pour recevoir un gaz de combustion qui a passé le premier et le second étage d'absorption (104, 105) et pour le mettre en contact avec une solution ionique.

22. Système selon la revendication 21, dans lequel ledit troisième étage d'absorption (106) comprend un réceptacle de collecte de liquide (112) conçu pour collecter une solution ionique en provenance du troisième étage d'absorption (108) et pour la délivrer au premier récipient collecteur (107).

23. Système selon la revendication 21, dans lequel le troisième étage d'absorption (106) comprend
un dispositif de distribution de liquide (118) et
un trajet de délivrance de solution ionique (117) configuré pour délivrer une solution ionique depuis le premier récipient collecteur (107) audit dispositif de distribution de liquide (118).

24. Système selon la revendication 21, dans lequel le trajet de délivrance de solution ionique (117) du troisième étage d'absorption (106) comprend un dispositif d'échange de chaleur (127) pour réguler la température de la solution ionique délivrée à un dispositif de distribution de liquide (118) du troisième étage d'absorption (106).

25. Système selon la revendication 21, dans lequel la température de la solution ionique délivrée au dispositif de distribution de liquide (118) est régulée de sorte à être dans la plage égale ou inférieure à 10 °C.

26. Système selon la revendication 21, dans lequel le troisième étage d'absorption (106) est configuré pour fonctionner avec une solution ionique contenant des particules solides.
